(19) Europäisches Patentamt
European Patent Office
Office européen des brevets

(11) Veröffentlichungsnummer: **0 006 517**
**B1**

(12) # EUROPÄISCHE PATENTSCHRIFT

(45) Veröffentlichungstag der Patentschrift: **18.05.83**

(21) Anmeldenummer: **79101867.4**

(22) Anmeldetag: **11.06.79**

(51) Int. Cl.³: **C 09 D 3/81**, C 09 D 3/66, C 08 G 81/02

(54) **Verfahren zur Herstellung von Bindemitteln, nach diesem Verfahren hergestellte Bindemittel und deren Verwendung zur Herstellung von Überzugsmitteln.**

(30) Priorität: **23.06.78 DE 2827592**

(43) Veröffentlichungstag der Anmeldung:
**09.01.80 Patentblatt 80/1**

(45) Bekanntmachung des Hinweises auf die Patenterteilung:
**18.05.83 Patentblatt 83/20**

(84) Benannte Vertragsstaaten:
**DE FR GB IT NL**

(56) Entgegenhaltungen:
**DE - A - 2 334 858**

**Die Akte enthält technische Angaben, die nach dem Eingang der Anmeldung eingereicht wurden und die nicht in dieser Patentschrift enthalten sind.**

(73) Patentinhaber: **BAYER AG**
**Zentralbereich Patente, Marken und Lizenzen**
**D-5090 Leverkusen 1, Bayerwerk (DE)**

(72) Erfinder: **Höhlein, Peter, Dr.**
**Wilhelmshofallee 12**
**D-4150 Krefeld 1 (DE)**
Erfinder: **Sonntag, Michael, Dr.**
**Gartenstrasse 27a**
**D-5068 Odenthal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 006 517 B1

# Verfahren zur Herstellung von Bindemitteln, nach diesem Verfahren hergestellt Bindemittel und deren Verwendung zur Herstellung von Überzugsmitteln

Die vorliegende Erfindung betrifft ein Siloxan-modifiziertes Bindemittel auf Basis von Polyacrylatharzen und Polyestern zur Herstellung von Überzugsmassen, die sich—in Kombination mit üblichen Aminoplast—oder Polyisocyanat-Vernetzern—zu Lackierungen mit ausgezeichneten optischen Eigenschaften härten lassen und die an Automobildecklacke gestellten Anforderungen in hervorragender Weise erfüllen.

Lackierungen auf der Grundlage OH-funktioneller Polyacrylatharze zeichnen sich durch hohe mechanische Belastbarkeit, gute Polierbarkeit und ausgezeichnete Beständigkeiten gegen chemische Einflüsse aus. Sie sind deshalb als Schutzüberzüge für Blecke aller Art bestens geeignet.

Automobildecklackierungen müssen darüber hinaus besonderen Anforderungen hinsichtlich Pigmentaufnahmevermögen, Fülle, Brillianz und Glanzhaltung genügen—alles Eigenschaften, die von Alkydharzen und ölfreien Polyester in hohem Maß erfüllt werden.

Automobildecklacke müssen insbesondere eine ausgezeichnete Pigmentbenetzung—eine wesentliche Voraussetzung für Hochglanz—aufweisen. Sofern als Vernetzer Isocyanatgruppen-haltige Verbindungen eingesetzt werden, sollen die Lacke außerdem eine möglichst lange Standzeit besitzen.

Weder Polyacrylatharze noch Alkydharze bzw. ölfreie Polyester erfüllen sämtliche oben aufgezählten Anforderungen, so daß ein starkes Bedürfnis nach einem neuen Bindemitteltyp bestand.

Bindemittel, die zum Zwecke der Verbesserung der Bewitterungsbeständigkeit mit Polysiloxanen modifiziert werden, wobei eine befriedigende Erhögung der Wetterbeständigkeit jedoch erst bei Polysiloxanenteilen von mehr als 30 Gew.-% erreichbar its, sind zwar seit längerer Zeit bekannt (ACS, Org. Coat. and Plast. Chem. *29*, Nr. 1 (1969), S. 143 und Der Fahrzeug- und Metall-Lackierer, Heft 3 (1967), Seite 56); es war jedoch selbst für den Fachmann überaus überaschend, daß sich durch Modifizierung eines Polyacrylat/Polyester- bzw. Alkydharz-Gemisches mit einer relativ geringen Menge eines Hydroxyl- und/oder Alkoxygruppen-tragenden Polysiloxans Bindemittel herstellen lassen, die sämtlichen bekannten Bindemitteln für Automobildecklacke überlegen sind une die oben geforderten guten Eigenschaften in nahezu idealer Weise in sich vereinigen.

Gegenstand der vorliegenden Erfindung ist ein Verfahren zur Herstellung von Bindemitteln aus

I. 1—97 Gew.-Teilen Copolymerisatharzen, welche pro Molekül mindenstens zwei funktionelle Hydroxyl-, Carboxyl-, Alkoxy- und/oder Epoxid-Gruppierungen enthalten, hergestellt durch Copolymerisation aus
  a. 0—50 Gew.-Teilen mindestens eines Hydroxyalkylesters der Acryl- oder Methacrylsäure mit 2—4 C-Atomen im Hydroxylalkylrest
  b. 0—60 Gew.-Teilen mindestens einer Verbindung der Gruppe Styrol, $\alpha$-Methylstyrol, o-Chlorstyrol, p-Chlorstyrol, o-, m- oder p-Methylstyrol, p- tert.-Butylstyrol oder Methylmethacrylat;
  c. 10—90 Gew.-Teilen mindestens eines Acrylsäure-esters mit 1—12 C-Atomen im Alkoholrest und/oder mindestens eines Methacrylsäureesters mit 2—12 C-Atomen im Alkoholrest;
  d. 0—30 Gew.-Teilen mindestens einer $\alpha,\beta$-monoolefinisch ungesättigten Mono- oder Dicarbonsäure mit 3—5 C-Atomen und/oder mindestens eines Maleinsäurehalbesters mit 2—14 C-Atomen im Alkoholrest oder deren Umsetzungsprodukte mit einer Monoglycidylverbindung,
  e. 0—50 Gew.-Teilen mindestens eines Acryl- bzw. Methacrylsäureglycidylesters bzw. deren Umsetzungsprodukten mit aliphatischen und/oder aromatischen Monocarbonsäuren und Aminoverbindungen,
  f. 0—40 Gew.-Teilen eines Acrylsäure- bzw. Methacrylsäureamides mit 1—20 C-Atomen im Aminorest, insbesondere alkoxylierter Hydroxymethylacryl- (oder-methacryl-) säureamide, welche auch in situ erzeugt werden können,
  g. 0—60 Gew.-Teilen Acrylnitril,

II. 97—1 Gew.-Teilen Alkydharzen und/oder ölfreien Polyestern und

III. 0,5—50 Gew.-Teilen mindestens eines Hydroxyl- und/oder Alkoxygruppen-tragenden Polysiloxans, wobei die Komponenten I, II und III bei Temperaturen von 70—200°C unter Abspaltung von Wasser bzw. Alkohol miteinander so lange zur Reaktion gebracht werden, bis der gewünschte Kondensationsgrad erreicht ist.

Die Summe der Gewichtsteile aller Reaktionspartner a—g beträgt 100.

Gegenstand der Erfindung sind ferner die nach diesen Verfahren hergestellten Bindemittel und deren Verwendung zur Herstellung von Überzugsmitteln.

Aus der DE—OS 23 34 858 ist die Verwendung von Mischkondensaten, die durch Verknüpfung eines Alkydharzes und eines Polymerisats durch u.a. Siloxane entstehen, als Lackzusatz zur Verhinderung von Oberflächenstörungen bekannt. Dieser Literaturstelle konnte der Fachmann keinen Hinweis darauf entnehmen, daß man durch Auswahl end definierter Copolymerisate und durch Übergang auf Polysiloxane zu Bindemitteln gelangt, die frei von Trübungen sind und eine ausgezeichnete Pigmentbenetzung aufweisen.

Die Herstellung der Polyacrylatharze I kann durch Copolymerisation der Bestandteile a—g nach üblichen Verfahren erfolgen, wobei der radikalischen Polymerisation in Masse bzw. in Lösung der Vorzug gegeben wird. Dabei werden bei Temperaturen von 70—160°C, vorzugsweise 100—150°C, in Gegenwart von Radikalbindnern und gegebenenfalls Reglern monomere Bausteine copolymerisiert. Bevorzugte Ausgangsverbindungen für die Polyacrylatharze I bestehen aus

a. 1—35 Gew.-Teilen
2-Hydroxyäthylacrylat
2-Hydroxyäthylmethacrylat
2-Hydroxypropylacrylat
2-Hydroxypropylmethacrylat
4-Hydroxybutyl(meth)acrylat oder deren Mischungen;
b. 10—60 Gew.-Teilen Styrol oder Methylmethacrylat oder Methylmethacrylat oder deren Mischungen;
c. 10—60 Gew.-Teilen Äthylacrylat, Methylacrylat, Butylacrylat, Butylmethacrylat, 2-Äthylhexylacrylat oder 2-Äthylhexylmethacrylat oder deren Mischungen;
d. 0—20 Gew.-Teilen Acrylsäure, Methacrylsäure oder Maleinsäurehalbester mit 4—8 C-Atomen in der Alkoholkomponente oder deren Mischungen;
e. 0—40 Gew.-Teilen Glycidyl(meth)acrylat bzw. deren Umsetzungsprodukte mit gesättigten und/oder ungesättigten aliphatischen und/oder aromatischen Monocarbonsäuren, wobei die Umsetzung vor, vorzugsweise nach der Copolymerisation, bei Temperaturen von 80—160°C durchgeführt wird (hierbei ist die Mitverwendung üblicher Katalysatoren eingeschlossen);
f. 0—40 Gew.-Teilen Methoxymethylacrylsäureamid bzw. Methoxymethylmethacrylsäureamid oder Mischungen derselben, wobei die alkoxylierten Monomeren copolymerisiert werden können, oder aber nach Copolymerisation von Acrylsäure- bzw. Methacrylsäureamid oder Mischungen derselben die Herstellung der alkoxylierten Verbindungen durch Umsetzung mit Formaldehyd in Gegenwart von Methanol vorgenommen werden kann;
g. 0—45 Gew.-Teilen Acrylnitril.

Die Monomeren a—g werden im wesentlichen in den gleichen Verhältnissen, wie sie zur Polymerisation eingesetzt sind, in das Copolymerisat eingebaut, wobei die einpolymerisierten Einheiten im wesentlichen statistisch verteilt sind.

Dabei dienen die Monomeren der Gruppe a zum Einbau der chemisch reaktiven Hydroxygruppen. Es ist für die Erfindung keinesfalls schädlich, wenn an den OH-funktionellen Monomeren vor oder nach Einbau innerhalb einer polymeranalogen Umsetzung Modifizierungen an dieser OH-Gruppe vorgenommen werden. Als bevorzugte Monomere der Gruppe a. seien 2-Hydroxyäthylacrylat, 2-Hydroxyäthylmethacrylat, 2-Hydroxypropylmethacrylat, 4-Hydroxybutylacrylat und 4-Hydroxybutylmethacrylat genannt.

Die Monomeren der Gruppe b. geben für sich alleine Homopolymerisate mit hohen Glasübergangstemperaturen von 70—110°C. Styrol und/oder Methylmethacrylat werden besonders bevorzugt.

Die Monomeren der Gruppe c. dienen zur Elastifizierung der Harze und stellen als Homopolymerisate elastische Produkte mit Glasübergangstemperaturen von +40 bis —80°C dar. Vorzugsweise seien genannt:

Methylacrylat, Äthyl(meth)acrylat, N- oder Isopropyl(meth)acrylat, Butyl(meth)acrylat, Isobutyl(meth)acrylat, tert.-Butyl(meth)acrylat, 2-Äthylhexyl(meth)acrylat.

Vorzugsweise werden Butylmethacrylat, Butylacrylat und 2-Athylhexyl(meth)acrylat eingesetzt.

Der Einbau der sauren Monomeren der Gruppe d. führt zu einen Steigerung der Reaktivität oder Funktionalität der Polymeren. Bevorzugte Monomere der Gruppe d. sind

Acryläure, Methacrylsäure, Maleinsäure, Monoester der Maleinsäure mit aliphatischen Alkoholen mit 4—8 C-Atomen, Itaconsäure und Fumarsäure.

Diese Monomeren können vor, während oder nach der Polymerisation mit Glycidylverbindungen, wie Glycid oder Glycidylester von Monocarbonsäuren mit 8—20 C-Atomen, vorzugsweise 10—16 C-Atomen umgesetzt werden.

Die Glycidylverbindungen der Gruppe e. erlauben über die chemisch reaktive Epoxidgruppierung die Vernetzung mit carboxylgruppenhaltigen Verbindungen und dienen der Modifizierung des Polyacrylatharzes durch die Addition von Fettsäuren, wobei im Falle von ungesättigten Fettsäuren lufttrocknende Polyacrylatharze zugänglich sind.

Die Copolymerisation mit den Monomeren der Gruppe f. führt zu selbstvernetzbaren Polyacrylatharzen, welche besonders gute Lösungsmittelbeständigkeit aufweisen.

Der Einbau von Acrylnitril schließlich beeinflußt die Lösungsmittelverträglichkeit in beträchtlichem Ausmaß.

Bevorzugte Initiatoren zur Duchführung der radikalischen Polymerisation sind z.B. symmetrische aliphatische Azoverbindungen wie

Azo-bis-isobuttersäurenitril, Azo-bis-2-methyl-valeronitril, 1,1'-Azo-bis-1-cyclohexannitril und

2,2'-Azo-bis-isobuttersäurealkylester; symmetrische Diacylperoxide, wie z.B. Acetyl-, Propionyl- oder Butyrylperoxid, Brom-, Nitro-, Methyl- oder Methoxy-Gruppen substituierte Benzoylperoxide sowie Lauroylperoxid; symmetrische Peroxydicarbonate, wie z.B. Diäthyl-, Diisoproyl-, Dicyclohexyl- sowie Dibenzylperoxydicarbonat; tert.-Butylperoctoat oder tert.-Butylphenylperacetat sowie Peroxycarbonate wie tert.-Butyl-N-(phenylperoxy)-carbamat oder tert.-Butyl-N-(2,3-dichlor- oder-4-chlorphenyl-peroxy)-carbamat. Weitere bevorzugte Peroxide sind: tert.-Butylhydroperoxid, Di-tert.-butylperoxid, Cumolhydroperoxid, Di-Cumolperoxid und tert.-Butylperpivalat.

Die mittleren Molekulargewichte und die molekularen Uneinheitlichkeiten der Polyacrylatharze wurden mit Hilfe der Gelpermeationschromatographie (GPC) an Styragelen mit THF als Elutionsmittel bestimmt. Dabei werden nach Erstellung einer universellen Eichbeziehung (nach Z. Grubisic, P. Rempp und H. Benoit, J. Polymer Sci. Part B, Polymer Letters 5 (1967) 753) aus der Verteilung der Chromatogramme die Molekulargewichtsmittelwerte Mw und Mn bestimmt. Die Polymerisate besitzen mittlere Molekulargewichte von $\bar{M}n$=500—50 000, vorzugsweise $\bar{M}n$=800—25 000 und Uneinheitlichkeiten

$$\frac{Mw}{Mn}-1 \text{ von } 0{,}5—10.$$

Die Polymerisation kann auch in Gegenwart eines inerten Lösungsmittels, wie z.B. Propanol, Isopropanol, N- oder Iso-Butanol, Methyläthylketon, Toluol, Xylol, Essigsäurebutylester usw. durchgeführt werden. Die Lösungsmittel können in Mengen von 5—40 Gew.-%, bezogen auf die Monomeren a.—g., eingesetzt werden.

Die Harze werden im Anschluß an ihre Herstellung nach einer evtl. vorgenommenen Modifizierung gewöhnlich bei Temperaturen von 140—200°C von flüchtigen Bestandteilen befreit. Dies kann z.B. entweder unter Normaldruck in Schlangenrohrverdampfern durch Einblasen eines Inertgases wie Stickstoff oder Wasserdampf in Mengen von 0,1—1 $m^3$ auf 1 kg Harzschmelze oder im Vakuum in Ausdampfapparaturen wie Fallfilmverdampfern, Dünnschichtverdampfern, Schneckenverdampfern, Entspannungsverdampfern oder Sprühverdampfern erfolgen.

Bei den in Lösungen hergestellten Copolymermisaten erfolgt die Entfernung der Restmonomeren in der Regel durch Destillation des Ansatzes.

Durch Verdünnung mit üblichen Lösungsmitteln wie Aromaten, Benzinen, Estern, Ketonen, Alkoholen und Glykolestern können die für die Weiterverarbeitung notwendigen Viskositäten eingestellt werden.

Im folgenden werden unter "Polyester II" fettsäure und ölfreie Polyester, under "Alkydharzen II" fettsäure- oder ölmodifizierte Polyester verstanden.

Unter Alkydharzen II und Polyestern II versteht man durch Polykondensation nach bekannten Verfahren aus Alkoholen und Carbonsäuren hergestellte Polykondensate der Art, wie sie z.B. im Römpp's Chemielexikon, Band 1, Seite 202, Franck'sche Verlagsbuchhandlung Stuttgart, 1966, definiert oder bei D. H. Solomon, The Chemistry of Organic Filmformers, S. 75—101, John Wiley & Sons Inc. New York, 1967, beschrieben sind.

Für die Synthese der Alkydharze II bzw. Polyester II bevorzugte Alkohole sind aliphatische, cycloaliphatische und/oder aromatische Alkohole mit 1—6, vorzugsweise 1—4, an nicht aromatische C-Atome gebundene OH-Gruppen und 1—24 C-Atomen pro Molekül, z.B. Glykole, wie Äthylenglykol, Propylenglykol, Butandiole, Neopentylglykol, 2-Äthyl-propandiol-1,3, Hexandiole; Ätheralkohole wie Di- und Triäthylenglykole, oxäthylierte Bisphenole; perhydrierte Bisphenole, ferner Trimethyloläthan, Trimethylolpropan, Glycerin, Pentaerythrit, Dipentaerythrit, Mannit und Sorbit, einwertige, kettenabbrechende Alkohole wie Propanol, Butanol, Cyclohexanol und Benzylalkohol.

Für die Synthese der Alkydharze II bzw. Polyester II bevorzugte Säurekomponenten sind aliphatische, cycloaliphatische und/oder aromatische mehrbasische Carbonsäuren, vorzugsweise Di-, Tri- und Tetra-carbonsäuren mit 4—12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Trimellitsäureanhydrid, Pyromellitsäureanhydrid, Maleinsäureanhydrid, Adipinsäure und Bernsteinsäureanhydrid, ferner halogenierte Säuren wie Chlorphthalsäuren und Hexachlorendomethylentetrahydrophthalsäure.

Für die Herstellung der Polyester II bzw. Alkydharze II bevorzugte Monocarbonsäuren sind aliphatische, cycloaliphatische und/oder aromatische Monocarbonsäuren mit 6—24 C-Atomen pro Molekül wie Benzoesäure, Butylbenzoesäure, Tolylsäure, Hexahydrobenzoesäure, Abietinsäure, Milchsäure sowie Fettsäureester wie Leinöl, Sojaöl, Holzöl, Saffloröl, Ricinusöl, Ricinenöl, Baumwollsaatöl, Erdnußöl, Tallölfettsäure, Leinölfettsäure, Sojaöl-, Holzöl-, Saffloröl- und Ricinenölfettsäure und aus natürlichen, ungesättigten Ölen oder Fettsäuren durch Konjugierung oder Isomersierung gewonnene Produkte; geeignete gesättigte Fettsäuren sind beispielsweise Cocosfettsäuren und n-Äthylhexansäure.

Das als Zahlenmittel bestimmte Molekulargewicht der Polyester II und Alkydharze II beträgt 400—10 000 (bis zu Molekulargewicht von 5000 dampfdruckosmometrisch bestimmt in Dioxan und

Aceton, wobei bei differierenden Werten der niedrigere Wert als korrekt angesehen wird; bei Molekulargewichten über 5000 membranosmometrisch bestimmt in Aceton).

Die Polyester II und Alkydharze II können in an sich bekannter Weise durch Kondensation nach den üblichen Verfahren hergestellt werden.

Im allgemeinen läßt man hierbei die Rohstoffgemische bei Temperaturen von 140—250°C unter einer Schutzgasatmosphäre, z.B. Stickstoff, solange unter Wasserabspaltung reagieren, bis die gewünschte Säurezahl oder die geforderte Viskosität erreicht ist. Die Harze lassen sich aber genauso gut nach der Azeotropfahrweise herstellen.

Die Polyester- und/oder Alkydharzbestandteile II der erfindungsgemäßen Bindemittel können gegebenenfalls unter Verwendung praxisüblicher, die Polykondensation beschleunigender Katalysatoren hergestellt werden, wie sie z.B. in der folgenden Literatur beschrieben sind:

H. Wagner und H. F. Sarx, Lackkunstharze, C. Hanser-Verlag, 5. Auflage (1971), S. 90 und W. R. Sorenson und T. W. Campbell, Preparative Methods of Polymer Chemistry, Intersc. Publ. New York 1961, 111—127 und die dort zitierten Literaturstellen.

Die so hergestellten Polyester bzw. Alkydharze II können entweder als 100 %ige Harze oder als Harzlösungen weiterverarbeitet werden. Geeignete Lösungsmittel sind die üblichen Lacklösungsmittel wie z.B. Alkohole mit 1—4 C-Atomen wie Methanol, Äthanol, n- und iso-Propanol, Butanole; Essigsäureester mit 2—4 C-Atomen in der Alkoholkomponente wie Essigsäureäthyl- und -butylester oder Äthylglykolacetat; Äthylenglykol-monoalkyläther mit 1—4 C-Atomen im Alkylrest wie Äthylenglykolmonomethyl-, äthyl- und -butyläther; aliphatische und alicyclische Ketone wie Methyläthylketon, Methylisobutylketon, Cyclohexanon, Aceton; niedere Äther, wie Tetrahydrofuran; chlorierte Kohlenwasserstoffe, wie Trichloräthylen; aromatische Kohlenwasserstoffe, wie Benzol, Toluol, Xylol oder Gemische der genannten Lösungsmittel.

Als Polysiloxane III verwendet man üblicherweise die Hydrolyse- bzw. Alkoholyseprodukte von trifunktionellen Silanen, welche am Siliciumatom Alkyl- oder Arylreste aufweisen und wobei zusätzlich zu den trifunktionellen Silanen auch Anteile an difunktionellen und gegebenenfalls geringe Anteile an monofunktionellen Silanen mitverwendet werden können. Die Hydrolyse bzw. Alkoholyse kann in an sich bekannter Weise erfolgen, vgl. z.B. W. Noll "Chemie und Technologie der Silicone", Verlag Chemie, 2. Auflage 1968, Seite 164.

So kann man z.B. die Silane mit einem Wasser-Alkohol-Gemisch umsetzen. Der Anteil an Wasser in dem Hydrolyse-Alkohol-Gemisch begrenzt den Anteil an SiOR-Gruppen. Eine andere Herstellungsweise besteht darin, daß man die Silane mit einem Gemisch aus tertiären kettenförmigen aliphatischen Alkoholen mit 4—8 Kohlenstoffatomen einerseits und primären und/oder sekundären kettenförmigen aliphatischen Alkoholen mit 1—8, vorzugsweise 1—4, Kohlenstoffatomen umsetzt. Ein solches Verfahren ist z.B. in der DE—OS 2 020 224 oder bei W. Noll. "Chemie und Technologie der Silicone", 2. Auflage, Verlag Chemie, Weinheim/Bergstr., 1968, S. 173, beschrieben.

Bei den eingesetzten Polysiloxanen III handelt es sich vorzugsweise um Verbindungen der folgenden Formel

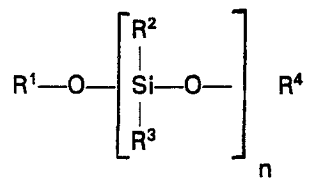

wobei

| | |
|---|---|
| n | ganze Zahlen von 2—5, |
| $R^1$, $R^4$ | geradkettige und/oder verzweigte Alkylgruppen mit 1—4 C-Atomen, Phenyl, Toluyl und/oder Benzyl, |
| $R^2$, $R^3$ | geradkettige und/oder verzweigte Alkylgruppen mit 1—4 C-Atomen, geradkettige und/oder verzweigte Alkoxygruppen mit 1—4 C-Atomen, Phenyl, Toluyl und/oder Benzyl und einer der Substituenten $R^2$, $R^3$ gegebenenfalls Hydroxyl bedeuten. |

Als geradkettige oder verzweigte Alkyl- und Alkoxygruppen seien gennant:

Methyl, Äthyl, Propyl, Isopropyl, Butyl, Isobutyl, Methoxy, Alkoxy, Propoxy, Isopropyloxy, Butoxy, Isobutyloxy.

Bevorzugt sind Polysiloxane III mit n=2—4, $R_2$ und $R_3$=Phenyl, Methyl und/oder Methoxy und $R_1$ und $R_4$=Methyl und/oder Phenyl, die als Typ beispielsweise im Fatipec-Kongreß 1970, Seite 171 und folgende und bei L. H. Braun, ACS, Org. Coat. and Plast. Chem. *29* (1969), No. 1, Seite 135, beschrieben sind.

Die Umsetzung der reaktiven Polyester und/oder Alkydharze II mit OH-funktionellen Polyacrylatharzen I in Gegenwart von Polysiloxanen III kann in der Schmelze bei 160—200°C oder vorzugsweise in Lösung bei 80—100°C durchgeführt werden. Bevorzugte Lösungsmittel sind z.B. Xylol, Gemische aromatischer Lösungsmittel, wie sie unter verschiedenen Bezeichnungen im Handel erhältlich sind, ferner Cyclohexanon, Methylglykolacetate oder Äthylglykolacetat.

Für die Umsetzung der Harze I und II mit den Polysiloxanen III können mit Vorteil Katalysatoren eingesetzt werden, wobei jedoch die Verwendung dieser Katalysatoren nicht bestimmend für das Eigenschaftsbild der fertigen Überzüge ist. Als Katalysatoren in diesem Sinne sind z.B. lösliche Salze des Kobalts, Zinks, Bleis, Mangans, Zinns und Titans verwendbar. Besonders gut eignen sich in diesem Zusammenhang Tetraalkyltitanate mit 2—5 C-Atomen in der Kohlenstoffkette, wie z.B. Tetraäthyltitanat, Tetraisopropyltitanat, Tetrapropyltitanat, Tetraisobutyltitanat, Tetrabutyltitanat.

Die Reaktion der Harze I und II mit der Polysiloxan-Komponente III kann natürlich in verschiedenen Stadien abgebrochen werden. Im allgemeinen wird es jedoch wünschenswert erscheinen, die Reaktion erst kurz vor Beginn der Gelierung zu stoppen. Mittels einer kurzen Versuchsreihe ist der Zeitpunkt für einen Reaktionsabbruch mühelos zu bestimmen. Ein geeignetes maß für das Fortschreiten der Reaktion kann der abgespaltene Wasser- bzw. Alkoholanteil sein. In vielen Fällen hat es sich als günstig erwiesen, die Reaktion nach Abscheiden von 20—80, vorzugsweise 30—70, % der theoretisch abzuspaltenden Wasser- bzw. Alkoholmenge abzubrechen. Bei kleinen Ansätzen oder bei geringen Polysiloxanmengen dürfte es oft günstiger sein, die Viskosität als Maß für das Fortschreiten der Reaktion zu wählen.

Die erfindungsgemäßen neuartigen Bindemittel können alleinige Bindemittel eines Lacksystems sein, sie können jedoch, wie in der Lackchemie üblich, selbstverständlich auch mit weiteren Harzen zur Modifizeirung von Eigenschaften kombiniert werden. Im allgemeinen werden die erfingungsgemäßen Bindemittel als fremdvernetzende Systeme eingesetzt. So können als Vernetzungskomponenten z.B. Polyisocyanate, Polyisocyanurate, Melaminharze, Benzoguanaminharze, Harnstoffharze, Epoxidharze, Carbonsäuren, Polyisoxazoline usw. Verwendung finden. Durch Ein- bau von ungesättigten Fettsäuren können aber such luft-trocknende Eigenschaften vermittelt werden.

Die Herstellung der Lackfilme kann durch übliche Methoden wie Streichen, Spritzen, Tauchen, Rakeln usw. auf geeignete Unterlagen z.B. aus Metall, Holz, Papier, Glas, Keramik, Stein, Beton, Kunststoff usw. erfolgen.

Die in den Beispielen angegebenen Prozentgehalte und Teile beziehen sich auf das Gewicht, sofern nicht anders vermerkt.

Beispiele

Alkydharz A

Aus 1417 Teilen Phthalsäureanhydrid, 990 Teilen Benzoesäure, 990 Teilen Fesstäure, 728 Teilen Trimethylolpropan und 757 Teilen Pentaerythrit wird durch Veresterung bei 200°C under einer Stickstoffatmosphäre ein ölfreier Polyester mit einer Säurezahl von ca. 10 und einer Viskosität entsprechend einer Auslaufzeit (DIN 53 211, 50 %ig in Xylol) von 120—130 s hergestellt.

Copolymerisat B

Nach einem isothermen Zulaufverfahren werden bei 110°C unter Stickstoffatmosphäre 1120 Teile Styrol, 350 Teile Hydroxypropylmethacrylat, 282 Teile Butylacrylat und 18 Teile Mercaptoaethanol copolymerisiert, indem das Monomerengemisch in ca. 4 Stunden in 1020 Teile Xylol eingefahren wird, welches auf 110°C erwärmt worden ist. Gleichzeitig erfolgt unter getrennter Dosierung die Zugabe von 70 Teilen tert.-Butylperoctoat in 164 Teilen Xylol, welches innerhalb von 5 Stunden zugegeben wird.

Es resultiert ein Copolymerisat mit einer Viskosität entsprechend einer Auslaufzeit (DIN 53 211, 50 %ig in Xylol) von 120—130 s und einem Molekulargewicht Mn von 5430. Der Festgehalt von 60 % wird durch Destillation des Ansatzes eingestellt.

Vergleichsbeispiel

Zu 1200 Teilen Polyester, 60 %ig in Xylol, werden unter Rühren und Stickstoffatmosphäre 1600 Teile Copolymerisat-Harz, 60 %ig in Xylol, zugegeben und ca. 2 Stunden bei 60°C gerührt. Es resultiert ein Produkt mit einer Viskosität von 4750 mPa.s (Höppler-Viskosimeter) und einem Festgehalt von 60 Gew.-%.

Nach einer Lagerung von ca. 14 Tagen treten Trübungserscheinungen auf.

Beispiel 1

Zu einer Mischung aus 2497 Teilen Copolymerisat-Harz B, 60 %ig in Xylol, und 1741 Teilen Alkydharz A, 60 %ig in Xylol, werden 79 Teile Polysiloxanharz$^+$ und 0,08 Teilen Tetrabutyltitanat gegeben. Die Mischung wird unter Rühren und Stickstoffatmosphäre bei 120°C 4 Stunden gehalten. Nach dem Abkühlen wird eine klare Lösung erhalten, die eine Viskosität entsprechend einer Auslaufzeit (DIN 53 211, 50 %ig in Xylol) von 130 s besitzt.

Das klare Produkt zeigte noch nach 2 Monaten keine Trübungserscheinungen und ergab die in den Tabelle 2 und 3 angegebenen Prüfwerte.

$^+$Methoxysubstituiertes Polysiloxanharz mit einem Molekulargewicht von ca. 600, einem Siliciumanteil von 17 Gew.-% und 33 Mol-% Methylgruppen.

Beispiel 2

Aus 1904,8 Teilen Copolymerisat-Harz B, 60 %ig in Xylol, 1333,4 Teilen Alkydharz A, 60 %ig in Xylol, 100 Teilen Polysiloxanharz$^+$ und 0,1 Teil Tetrabutyltitanat wird unter Stickstoffatmosphäre und Rühren bei 120°C über 5 Stunden ein Produkt mit einer Viskosität entsprechend einer Auslaufzeit von 117 s (DIN 53 211, 50 %ig in Xylol) hergestellt, das nach dem Abkühlen eine klare Lösung ergab.

Das klare Produkt zeigte noch nach 2 Monaten keine Trübungserscheinungen und ergab die in der Tabelle 2 und 3 angegebenen Prüfwerte.

Beispiel 3

Eine Mischung aus 1333,4 Teilen Copolymerisat-Harz B, 60 %ig in Xylol, 2000 Teilen Alkydharz A, 60 %ig in Xylol, 60 Teilen Polysiloxan$^+$ und 0,06 Teilen Tetrabutyltitanat wird unter Rühren und Stickstoffatmosphäre über 3 Stunden bei 120°C gehalten. Nach dem Abkülen wird eine klare Lösung mit einer Viskosität entsprechend einer Auslaufzeit (DIN 53 211, 50 %ig in Xylol) von 85 s erhalten.

Das klare Produkt zeigt noch nach 2 Monaten keine Trübungserscheinungen und ergab die in den Tabellen 2 und 3 angegebenen Prüfwerte.

Prüfung

1 Klarlacke

Zur Prüfung der lacktechnischen Eigenschaften der Klarlackfilme wurden Alkydharz A, das Produkt des Vergleichsbeispiels und der Beispiele 1—4 als 2-Komponenten-Lacke mit Isocyanat (Desmodur N, Handels-produkt der Bayer AG) bei Raumtemperatur getrocknet. Dabei wurden die Bindemittelbestandteile in den in Tabelle 1 angegebenen Mengenverhältnissen durch Rühren homogenisiert, mittels eines Rakels auf Glasplatten aufgetragen und an der Luft bei Raumtemperatur (ca. 20—25°C) getrocknet. Die Prüfergebnisse sind in Tabelle 2 aufgeführt.

Die Klarlacke wurden in nahezu gleicher Trockenfilmschichtdicke von ca. 45 $\mu$ aufgezogen und geprüft. Die angegebenen Pendelhärten wurden nach König in Sekunden nach 1, 3 und 7 Tagen Lufttrocknung ermittelt (vgl. W. König, farbe+lacke 59 (1953), Seite 435): Je geringer der Meßwert, desto weicher der Film. Es ergeben sich für Alkydharz A alleine die niedrigsten Werte, die bei Zugabe von Copolymeren (Vergleichsbeispiel) heraufgesetzt werden können. Eine nochmalige Steigerung kann durch die Polysiloxanmodifizierung (Beispiele 1—3) erzielt werden.

"Sandtrocken" bedeutet, daß auf die Lackierung aufgebrachte Sandkörner durch Abfegen mit einem feinen Haarpinsel entfernt werden können, ohne daß sie an der Filmoberfläche haften bleiben. Die Zeit, nach der eine solche Operation erfolgreich verlaufen ist, ist in der Tabelle 2 angegeben. Dabei zeigt Alkydharz A den Schlechtesten Wert, der durch Zugabe von Copolymeren von 3-1/2 auf 1-1/2 h verbessert werden kann (Vergleich). Die Polysiloxanmodifizierungen (Beispiele 1—3) behalten das hohe Niveau bei.

Zur Bestimmung der Gelierzeit Wird in den Lackansatz eine langsam routierende Kunststoffscheibe eingebracht, die über eine Welle mit einem Anzeigegerät verbunden ist. Beim Erreichen einer bestimmten Viskosität wird die Rotation der Scheibe unterbrochen und auf dem Anzeigegerät kann die Rotationsdauer abgelesen werden. Hier ergibt sich für das Copolymer Polyestergemisch (Vergleich) die geringste Zeit von 13 Std., während die Polysiloxanmodifizierung (Beispiele 1—3) eine Verlängerung des "Potlife" auf 16 Stunden bewirkt.

Aus der Tabelle 2 ist auch ersichtlich, daß dür das Polyester-Copolymergemisch eine trübe Lieferform (Vergleich) erhalten wird. Diese Trübung verschwindet bei der Polysiloxanmodifizierung (Beispiele 1—3) und tritt auch nach einer Lagerung von 3 Monaten nicht wieder auf, während das Erwärmen des Produkts aus dem Vergleichsversuch auf 120°C eine klare Lösung ergibt, die sich beim Abkühlen allerdings sofort oder nach längstens 14 Tagen wieder eintrübt.

2. Pigmentierte Lackfilme

Zur Prüfung der lacktechnischen Eigenschaften wurden die pigmentierten Lackfilme in den Zusammensetzungen der Tabelle 3 auf dem Dreiwalzenstuhl angerieben und nach Zugabe von Desmodur N bei Raumtemperatur getrocknet.

Die Bestimmungen der Pigmentbenetzung erfolgte mit den pigmentierten Lacklösungen in der Weise, daß dieselben auf Glasplatten aufgegossen und bei Raumtemperatur aufrecht stehend getrocknet wurden. Nach dem Trocknen wurde die Homogenität des Films beurteilt, wobei sehr gute Pigmentbenetzung völlige Homogenität und sehr schlechte Pigmentbenetzung Flokkulation des Films (Inhomogenität) bedeuten. Die Schichtdicken der getrockneten Filme betrug ca. 45 $\mu$. In Tabelle 3 ist wiedergegeben, daß für die Polysiloxanmodifizierten Beispiele 2 und 3 für alle geprüften Pigmente optimale Pigmentbenetzungen erzielt werden, während der Vergleichsversuch (Polyester/Copolymermischung) teilweise sehr schlechte Werte zeigt.

$^+$Methoxysubstituiertes Polysiloxanharz mit einem Molekulargewicht von ca. 600, einem Siliciumanteil von 17 Gew.-% und 33 Mol-% Methylgruppen.

TABELLE 1
Zusammensetzung der Klarlackfilme (Gewichtsteile)

| | Alkydharz A | Vergleich | Beispiele 1 | 2 | 3 |
|---|---|---|---|---|---|
| Bindemittel, 60 %ig in Xylol | 166,7 | 167,0 | 167,0 | 167,0 | 167,0 |
| Verlaufsmittel, 1 %ig in EGA | 2,8 | 2,8 | 2,8 | 2,8 | 2,8 |
| EGA/Xylol/BA=1:1:1 | 125,0 | 125,0 | 125,0 | 125,0 | 125,0 |
| Desmodur N, 75 %ig in EGA/ Xylol–1:1 | 50,0 | 52,0 | 52,0 | 52,0 | 52,0 |
| Festkörper [%] | 40 | 40 | 40 | 40 | 40 |

EGA=Äthylglykolacetat
BA=Butylacetat
Desmodur N=polyfunktionelles, aliphatisches Isocyanat (Handelsprodukt der Bayer AG).

TABELLE 2
Prüfergebnisse der Klarlackfilme

| | Alkydharz | Vergleich | Beispiele 1 | 2 | 3 |
|---|---|---|---|---|---|
| Schichtdicke [$\mu$] | 45 | 49 | 45 | 35 | 40 |
| Gelierzeit [h] | 18 | 13 | 16 | 16 | 16 |
| Sandtrocken [h] | 3,5 | 1,5 | 1,5 | 1,5 | 2,5 |
| Pendelhärte nach König [sec]nach | 1 Tg. 93 | 70 | 74 | 56 | 62 |
| | 3 Tg. 126 | 137 | 154 | 151 | 127 |
| | 7 Tg. 140 | 154 | 160 | 161 | 168 |
| Aussehen der Lieferform nach 14 Tagen | klar | trübe | klar | klar | klar |

## TABELLE 3

Zusammensetzung [Gewichtsteile] und Prüfergebnisse für pigmentierte Filme

| | Vergleichsbeispiel | | | | Beispiele 2 | | | | Beispiele 3 | | | |
|---|---|---|---|---|---|---|---|---|---|---|---|---|
| Bindemittel, 60 %ig in Xylol | | | | 167,0 | | | | 167,0 | | | | 167,0 |
| Bentone, 10 %ig in Testbenzin | | | | 5,6 | | | | 5,6 | | | | 5,6 |
| Verlaufsmittel, 1 %ig in EGA | | | | 2,8 | | | | 2,8 | | | | 2,8 |
| Siliconöl OL, 10 %ig in Xylol | | | | 0,7 | | | | 0,7 | | | | 0,7 |
| EGA/Xylol/BA (1:1:1) | | | | 95,0 | | | | 95,0 | | | | 95,0 |
| Desmodur N, 75 %ig in EGA/Xylol (1:1) | | | | 52,0 | | | | 52,0 | | | | 52,0 |
| $TiO_2$, RN 57 | 84,0 | 7,0 | 65,8 | — | 84,0 | 7,0 | 65,8 | — | 84,0 | 7,0 | 65,8 | — |
| Paliogenorange 2640 | — | 2,8 | — | — | — | 2,8 | — | — | — | 2,8 | — | — |
| Paliogenorange 3040 | — | 11,2 | — | — | — | 11,2 | — | — | — | 11,2 | — | — |
| Heliogenblau 6975 LF | — | — | 3,4 | — | — | — | 3,4 | — | — | — | 3,4 | — |
| Paliogenviolett 5890 | — | — | 0,2 | — | — | — | 0,2 | — | — | — | 0,2 | — |
| Flammruß 101 | — | — | 0,6 | — | — | — | 0,6 | — | — | — | 0,6 | — |
| Chromgelb 5072 | — | — | — | 84,0 | — | — | — | 84,0 | — | — | — | 84,0 |
| Pigment, bzw. auf Festharz [%] | 60 | 15 | 50 | 60 | 60 | 15 | 50 | 60 | 60 | 15 | 50 | 60 |
| Pigmentbenetzung[1] (Glasaufguß) | 2 | 4 | 1 | 5 | 0 | 1 | 0 | 0 | 0 | 1 | 0 | 0 |

[1]Allgemeine Bewertungsskala: 0=auxgezeichnet, 1=sehr gut, 2=gut, 3=befriedigend, 4=ungenügend, 5=sehr schlecht.

Polyester bzw. Alkydharze C—E sind als Beispiele für weitere Harze dieser Art gedacht. Sie können statt des Alkydharzes A als Komponente der erfindungsgemäßen Bindemittel Verwendung finden.

Polyester C

In einer Schmelzkondensationsapparatur werden unter Stickstoffatmosphäre 2079 Teile Phthalsäureanhydrid, 666 Teile Isophthalsäure, 293 Teile Adipinsäure, 622 Teile Ethylenglykol, 835 Teile Neopentylglykol und 474 Teile Hexandiol-1,6 unter langsamer Temperatur-steigerung innerhalb von 20 Stunden auf 240°C erhitzt und so lange bei dieser Temperatur gehalten, bis eine Säurezahl <10 erreicht ist. Der resultierende Polyester wird 60 %ig in Xylol gelöst.

Alkydharz D

Aus 1510 Teilen Phthalsäureanhydrid, 1444 Teilen p-tert.-Butylbenzoesäure, 1075 Teilen Fettsäure+, 759 Teilen Trimethyolopropan und 763 Teilen Pentaerythrit wird durch Veresterung bei 200°C unter einer Stickstoffatmosphäre ein Alkydharz mit einer Säurezahl von ca. 10 und einer Viskosität entsprechend einer Auslaufzeit (DIN 53 211, gemessen 50 %ig in Xylol), von 130—150 s hergestellt. Das Alkydharz wird anschließend 60 %ig in Xylol gelöst.

Polyester E

832 Teile 2-Ethylpropandiol-1,3, 268 Teile Trimethylol-propan, 770 Teile Phthalsäureanhydrid und 642 Teile Adipinsäure werden unter Rühren und Durchleiten von Stickstoff innerhalb von 8 Stunden auf 230°C aufgeheizt und dann bei 230°C bis zu einer Viskosität entsprechend einer Auslaufzeit von 100 s (gemessen 60 %ig in Xylol, DIN 53 211) und einer Säurezahl von ca 10 gehalten. Nach dem Abkühlen wird eine 60 %ig Lösung in Xylol bereitet.

Diese Polyester bzw. Alkydharze können mit den im Vergleichsbeispiel und in den nachfolgenden Beispielen aufgeführten Copolymerisatharzen in der Patentschrift angegebenen Mischungsverhältnissen unter Zugabe von Polysiloxanharz und Katalysator zu den beanspruchten Überzugsmassen umgesetzt werden.

Im folgenden werden Beispiele beschrieben, die aus verschieden hergestellten Copolymerisatharzen unter Zugabe von Alkydharz A sowie polysiloxanharz und Tetrabutyltitanat zu den beanspruchten Überzugsmassen umgesetzt werden.

Beispiel 4

Zu 3438 Teilen Copolymerisatharz F, hergestellt aus 1542 Teilen Methylmethacrylat, 481 Teilen Hydroxypropylmethacrylat, 388 Teilen Butylacrylat und 25 Teilen tert.-Dodecylmercaptan, welche in 1405 Teilen Xylol durch Zugabe von 226 Teilen tert.-Butyl-peroctoat unter denselben Reaktionsbedingungen wie Copolymerisat B copolymerisiert wurden, werden 2397 Teile Alkydharz A, 60 %ig in Xylol, 109 Teile Polysiloxanharz+ und 0,11 Teile Tetrabutyltitanat gegeben.

Die Mischung wird unter Rühren und Stickstoffatmosphäre bei 120°C 4 Stunden gehalten. Nach dem Abkühlen resultiert eine klare Lösung, die eine Viskosität entsprechend einer Auslaufzeit von 140—160 s (gemessen 50 % ig in Xylol) Besitzt.

Beispiel 5

Zu 2738 Teilen Copolymerisat-Harz G, hergestellt aus 1228 Teilen Styrol, 383 Teilen Hydroxyethylmethacrylat, 309 Teilen Butylacrylat und 20 Teilen Mercaptoethanol, welche in 1119 Teilen Xylol durch Zugabe von 81 Teilen tert.-Butylperoctoat unter denselben Reaktionsbedingungen wie Copolymerisat B copolymerisiert wurden, werden 1909 Teile Alkydharz A, 60 %ig in Xylol, 87 Teile Polysiloxanharz+ und 0,09 Teile Tetrabutyltitanat gegeben. Die Mischung wird unter den Reaktionsbedingungen des Beispiels 4 weiterverarbeitet. Nach dem Abkühlen wird eine klare Lösung erhalten, die eine Viskosität entsprechend einer Auslaufzeit von ca. 145 s (gemessen 50 %ig in Xylol) besitzt.

Beispiel 6

Zu 3240 Teilen Copolymerisatharz H, hergestellt aus 1453 Teilen Methylmethacrylat, 453 Teilen Hydroxyethylmethacrylat, 366 Teilen Ethylacrylat und 24 Teilen n-Dodecylmercaptan, welche in 1324 Teilen Xylol durch Zugabe von 213 Teilen tert.-Butylperoctoat unter den Reaktionsbedingungen wie Copolymerisat B copolymerisiert wurden, werden 2259 Teile Alkydharz A (60 %ig in Xylol), 103 Teile Polysiloxanharz+ und 0,1 Teil Tetrabutyltitanat gegeben. Die Mischung wird unter den Bedingungen des Beispiels 4 weiterverarbeitet. Es resultiert eine klare Lösung, die eine Viskosität entsprechend einer Auslaufzeit von 156 s (gemessen 50 %ig in Xylol) besitzt.

+Fettsäuregemisch einer Säurezahl von 183—189 mit einem Gehalt an 1,5 Gew.-% Laurinsäure, 20 Gew.-% Myristinsaüre, 45 Gew,-% Palmitinsäure, 30 Gew.-% Stearinsäure und 3,3 Gew.-% Ölsäure.

+Methoxysubstituiertes Polysiloxanharz mit einem Molekulargewicht von ca. 600, einem Siliciumanteil von 17 Gew.-% und 33 Mol-% Methylgruppen.

Beispiel 7

Zu 3071 Teilen Copolymerisatharz I, hergestellt aus 711 Teilen Styrol, 711 Teilen Methylmethacrylat 443 Teilen Hydroxypropylmethacrylat, 358 Teilen 2-Ethylhexylacrylat und 34 Teilen tert.-Dodecylmercaptan, welche in 1295 Teilen Xylol durch Zugabe von 208 Teilen tert.-Butylperoctoat unter den Reaktionsbedingungen wie Copolymerisat B copolymerisiert wurden, werden 2210 Teilen Alkydharz A (60 %ig in Xylol), 101 Teile Polysiloxanharz+ und 0,1 Teile Tetrabutyl-titanat gegeben. Die Weiterverarbeitung erfolgt analog Beispiel 4. Die erhaltene Reaktionsmischung hat nach dem Abkühlen eine Viskosität entsprechend einer Auslaufzeit von 133 s (gemessen 50 %ig in Xylol).

Beispiel 8

Zu 4352 Teilen Copolymerisatharz K, hergestellt aus 1955 Teilen Styrol, 608 Teilen Glycidylmethacrylat, 491 Teilen Butylacrylat und 47 Teilen Mercaptoethanol, welche in 1778 Teilen Xylol unter Zugabe von 286 Teilen tert.-Butylperoctoat unter den Reaktionsbedingungen wie Copolymerisat B copolymerisiert wurden, werden 3034 Teile Alkydharz A (60 %ig in Xylol), 137 Teile Polysiloxanharz+ und 014 Teile Tetrabutyltitanat gegeben. Die Verarbeitung dieser Mischung erfolgt analog Beispiel 4. Die nach dem Abkühlen erhaltene klare Lösung besitzt eine Viskosität entsprechend einer Auslaufzeit von 146 s (gemessen 50 %ig in Xylol).

Beispiel 9

Zu 2840 Teilen Copolymerisatharz L, hergestellt aus 2840 Teilen Methylmethacrylat, 397 Teilen Hydroxyethylmethacrylat, 321 Teilen Ethylacrylat und 21 Teilen tert.-Dodecylmercaptan, welche in 1161 Teilen Xylol unter Zugabe von 187 Teilen tert.-Butylperoctoat unter den Reaktionsbedingungen wie Copolymerisat B copolymerisiert wurden, werden 1980 Teile Alkydharz A (60 %ig in Xylol), 90 Teile Polysiloxanharz+ und 0,09 Teile Tetrabutyltitanat gegeben. Die Weiterverarbeitung erfolgt analog Beispiel 4. Die resultierende klare Harzlösung besitzt eine Viskosität entsprechend einer Auslaufzeit von 137 s (gemessen 50 %ig in Xylol).

**Patentansprüche**

1. Verfahren zur Herstellung von Bindemitteln aus

I. 1—97 Gew.-Teilen Copolymerisatharzen, welche pro Molekül mindestens zwei funktionnel Hydroxy-, Carboxy-, Alkoxy- und/oder Epoxid-Gruppierungen enthalten, hergestellt durch Copolymerisation aus

a) 0—50 Gew.-Teilen mindestens eines Hydroxyalkylesters der Acryl- oder Methacrylsäure mit 2—4 C-Atomen im Hydroxyalkylrest,

b) 0—60 Gew.-Teilen mindestens einer Verbindung der Gruppe Styrol, $\alpha$-Methylstyrol, o-Chlorstyrol, p-Chlorstyrol, o-, m- oder p-Methylstyrol, p-tert.-Butylstyrol oder Methylmethacrylat,

c) 10—90 Gew.-Teilen mindestens eines Acrylsäureesters mit 1—12 C-Atomen im Alkoholrest und/oder mindestens eines Methacrylsäureesters mit 2—12 C-Atomen im Alkoholrest,

d) 0—30 Gew.-Teilen mindestens einer $\alpha,\beta$-mono-olefinisch ungesättigten Mono- oder Dicarbonsäure mit 3—5 C-Atomen und/oder mindestens eines Maleinsäurehalbesters mit 2—14 C-Atomen im Alkoholrest oder deren Umsetzungsprodukte mit einer Monoglycidylverbindung,

e) 0—50 Gew.-Teilen mindestens eines Acryl- bzw. Methacrylsäureglycidylesters bzw. deren Umsetzungsprodukten mit aliphatischen und/oder aromatischen Monocarbonsäuren und Aminoverbindungen,

f) 0—40 Gew.-Teilen eines Acrylsäure- bzw. Methacrylsäureamids mit 1—20 C-Atomen im Aminorest, insbesondere alkoxylierter Hydroxymethylacryl- (oder -methacryl-) säureamide, welche auch in situ erzeugt werden können,

g) 0—60 Gew.-Teilen Acrylnitril, wobei sich die Gewichtsteile der Komponenten a bis g auf 100 ergänzen,

II. 97—1 Gew.-Teilen Alkyldharzen und/oder ölfreien Polyestern und

III. 0,5—50 Gew.-Teilen mindestens eines Hydroxyl- und/oder Alkoxygruppen-tragenden Polysiloxans, wobei die Komponenten I, II und III bei Temperaturen von 70—200°C unter Abspaltung von Wasser bzw. Alkohol miteinander so lange zur Reaktion gebracht werden, bis der gewünschte Kondensationsgrad erreicht ist.

2. Nach Verfahren gemäß Anspruch 1 hergestellte Bindemittel.

3. Verwendung der Bindemittel nach Anspruch 2 zur Herstellung von Überzugsmitteln.

+Methoxysubstituiertes Polysiloxanharz mit einem Molekulargewicht von ca. 600, einem Siliciumanteil von 17 Gew.-% und 33 Mol-% Methylgruppen.

**Revendications**

1. Procédé de production de liants, à partir de:

I. 1 à 97 parties en poids de résines copolymères, qui contiennent par molécule au moins deux groupes fonctionnels hydroxyles, carboxyles, alcoxy et/ou époxyde, produites par copolymérisation de

a) 0 à 50 parties en poids d'au moins un ester hydroxyalkylique de l'acide acrylique ou de l'acide méthacrylique comportant 2 à 4 atomes de carbone dans le radical hydroxyalkyle,

b) 0 à 60 parties en poids d'au moins un composé de l'ensemble formé par le styrène, l'$\alpha$-méthylstyrène, l'o-chlorostyrène, le p-chlorostyrène, l'o-, le n- ou le p-méthylstyrène, le p-tertio-butylstyrène ou le méthacrylate de méthyle,

c) 10 à 90 parties en poids d'au moins un ester de l'acide acrylique comportant 1 à 12 atomes de carbone dans le radical de l'alcool et/ou au moins un ester de l'acide méthacrylique comportant 2 à 12 atomes de carbone dans le radical de l'alcool,

d) 0 à 30 parties en poids d'au moins un acide mono- ou dicarboxylique à insaturation monooléfinique en $\alpha$-$\beta$, comportant 3 à 5 atomes de carbone et/ou au moins un hémi-ester de l'acide maléique comportant 2 à 14 atomes de carbone dans le radical de l'alcool, ou leurs produits de réaction avec un composé monoglycidylique,

e) 0 à 50 parties en poids d'au moins un ester glycidylique de l'acide acrylique ou de l'acide méthacrylique ou leurs produits de réaction avec des acides monocarboxyliques et des composés, aminés, aliphatiques et/ou aromatiques,

f) 0 à 40 parties en poids d'un acrylamide ou méthacrylamide comportant 1 à 20 atomes de carbone dans le radical aminé, en particulier de l'hydroxyméthyl-acrylamide ou de l'hydroxy-méthyl-méthacrylamide alcoxylé, que l'on peut également produire sur place,

g) 0 à 60 parties en poids d'acrylonitrile, le nombre des parties en poids des composants a) à g) s'élevant à 100,

II. 97 à 1 parties en poids de résines alkydes et/ou de polyesters sans huile, et

III. 0,5 à 50 parties en poids d'au moins un polysiloxanne portant des groupes hydroxyles et/ou alcoxy, en faisant réagir à des températures de 70 à 200°C, avec separation par scission de l'eau ou de l'alcool les composants I, II et III l'un avec l'autre jusqu'à obtention du degré voulu de condensation.

2. Liant produit par le procédé selon la revendication 1.

3. Application selon la revendication 2 à la production de matières de revêtement.

**Claims**

1. Process for the preparation of binders of

I. 1—97 parts by weight of copolymer resins which contain, per molecule, at least two functional hydroxyl, carboxyl, alkoxy and/or epoxide groups, which resins are prepared by copolymerisation from

a. 0—50 parts by weight of at least one hydroxyalkyl ester of acrylic or methacrylic acid having 2—4 C-atoms in the hydroxyalkyl group,

b. 0—60 parts by weight of at least one compound of the group comprising styrene, $\alpha$-methylstyrene, *o*-chlorostyrene, *p*-chlorostyrene, *o*-, *m*- or *p*-methylstyrene, *p*-tertiary butyl styrene or methyl methacrylate,

c. 10—90 parts by weight of at least one acrylic acid ester having 1—12 C-atoms in the alcohol group and/or at least one methacrylic acid ester having 2—12 C-atoms in the alcohol group,

d. 0—30 parts by weight of at least one $\alpha,\beta$-monoolefinically unsaturated mono- or dicarboxylic acid having 3—5 C-atoms and/or at least one maleic acid semi-ester having 2—14 C-atoms in the alcohol group, or reaction products thereof with a monoglicidyl compound,

e. 0—50 parts by weight of at least one acrylic or methacrylic acid glycidyl ester, or reaction products thereof with aliphatic and/or aromatic monocarboxylic acids and amino compounds,

f. 0—40 parts by weight of an acrylic or methacrylic acid amide having 1—20 C-atoms in the amino group, in particular of alkoxylated hydroxylmethyl acrylic (or methacrylic) acid amides, which may also be produced in situ, and

g. 0—60 parts by weight of acrylonitrile, the parts by weight of components a to g adding up to 100,

II. 97—1 parts by weight of alkyd resins and/or oil-free polyesters and

III. 0.5—50 parts by weight of at least one polysiloxane having hydroxyl and/or alkoxy groups, components I, II and III being reacted together at temperatures of from 70—200°C with elimination of water or alcohol until the desired degree of condensation has been reached.

2. Binders prepared by the process according to claim 1.

3. Use of the binders according to claim 2 for the production of coatings.